(19) Europäisches Patentamt
European Patent Office
Office européen des brevets

(11) **EP 2 380 072 B1**

(12) **EUROPÄISCHE PATENTSCHRIFT**

(45) Veröffentlichungstag und Bekanntmachung des Hinweises auf die Patenterteilung:
**25.06.2014 Patentblatt 2014/26**

(21) Anmeldenummer: **09784073.0**

(22) Anmeldetag: **04.12.2009**

(51) Int Cl.:
***G06F 1/04*** (2006.01)

(86) Internationale Anmeldenummer:
**PCT/EP2009/066453**

(87) Internationale Veröffentlichungsnummer:
**WO 2010/072548 (01.07.2010 Gazette 2010/26)**

(54) **AUSSETZBARER TAKTGENERATOR**

INTERRUPTIBLE CLOCK GENERATOR

GÉNÉRATEUR D'HORLOGE À RÉGIME INTERMITTENT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **22.12.2008 DE 102008055101**

(43) Veröffentlichungstag der Anmeldung:
**26.10.2011 Patentblatt 2011/43**

(73) Patentinhaber: **IHP GmbH-Innovations for High Performance Microelectronics / Leibniz-Institut für innovative Mikroelektronik 15236 Frankfurt / Oder (DE)**

(72) Erfinder:
• **FAN, Xin
15230 Frankfurt (Oder) (DE)**
• **KRSTIC, Milos
15230 Frankfurt/Oder (DE)**
• **GRASS, Eckhard
12589 Berlin (DE)**

(74) Vertreter: **Eisenführ Speiser
Patentanwälte Rechtsanwälte PartGmbB
Anna-Louisa-Karsch-Strasse 2
10178 Berlin (DE)**

(56) Entgegenhaltungen:
• ROBERT MULLINS ET AL: "Demystifying Data-Driven and Pausible Clocking Schemes" 1. März 2007 (2007-03-01), ASYNCHRONOUS CIRCUITS AND SYSTEMS, 2007. ASYNC 2007. 13TH IEEE INTERNA TIONAL SYMPOSIUM ON, IEEE, PI, PAGE(S) 175 - 185 , XP031065532 ISBN: 9780769527710 das ganze Dokument
• SIMON MOORE ET AL: "Point to point GALS interconnect" 11. April 2002 (2002-04-11), Eighth International Symposium on Asynchronus Circuits and Systems (ASYNC'02) , Manchester, United Kingdom , XP002581229 ISBN: 0769515401 in der Anmeldung erwähnt das ganze Dokument
• XIN FAN ET AL: "Analysis and optimization of pausible clocking based GALS design" 4. Oktober 2009 (2009-10-04), COMPUTER DESIGN, 2009. ICCD 2009. IEEE INTERNATIONAL CONFERENCE ON, IEEE, PISCATAWAY, NJ, USA, PAGE(S) 358 - 365 , XP031627886 ISBN: 9781424450299 das ganze Dokument
• MUTTERSBACH J ET AL: "Practical Design of Globally-Asynchronous Locally-Synchronous Systems" 2. April 2000 (2000-04-02), ADVANCED RESEARCH IN ASYNCHRONOUS CIRCUITS AND SYSTEMS, 2000. (ASYNC 2 000). PROCEEDINGS. SIXTH INTERNATIONAL SYMPOSIUM ON EILAT, ISRAEL 2-6 APRIL 2000, LOS ALAMITOS, CA, USA,IEEE COMPUT. SOC, US, PAGE(S) 1 - 8 , XP002386194 ISBN: 9780769505862 in der Anmeldung erwähnt das ganze Dokument

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft einen aussetzbaren Taktsignalgenerator zur Verwendung insbesondere in einer asynchronen Hüllschaltung eines lokal synchronen Funktionsblocks einer global asynchronen lokal synchronen (GALS) Schaltung.

GALS-Schaltungen sind ein relativ neuer Ansatz im Entwurf von VLSI (Very Large Scale Integration) Systemen. Dieser Ansatz zeichnet sich beispielsweise gegenüber bekannten ASICs (Application Specific Integrated Circuits) u.a. durch den Vorteil aus, dass er eine äußerst hohe Flexibilität beim Schaltungsdesign erlaubt. Bei diesem Ansatz wird auf die Verwendung eines globalen Zeittaktes verzichtet. Damit werden Probleme wie beispielsweise erhöhte elektromagnetische Interferenz und aufwendiges Routen von Taktsignalleitungen vermieden.

Eine GALS-Schaltung umfasst eine Vielzahl lokal synchroner (LS) Funktionsblöcke, die mit einer jeweiligen lokal synchronen Frequenz getaktet sind, also in sich synchron sind. Ein LS-Funktionsblock ist eingebettet in eine Hüllschaltung, in der Fachwelt auch bezeichnet als "asynchronous wrapper", die eine Vielzahl asynchroner Schnittstellen, sogenannte Ports, zu anderen LS-Funktionsblöcken anbietet. Eine Hüllschaltung und ihr eingebetteter lokal synchroner (LS) Funktionsblock bilden gemeinsam einen Block einer GALS-Schaltung. Sogenannte "pipelines" verbinden jeweiligen Ports einer Hüllschaltung. Die Kommunikation zwischen den Blöcken erfolgt asynchron und richtet sich in der Regel nach dem bekannten Handshake-Protokoll.

Die Hüllschaltungen müssen also zum einen getaktete und zum anderen asynchrone Vorgänge koordinieren. Ein wichtiges Element einer jeweiligen Hüllschaltung bildet ein besonderer Taktsignalgenerator, zu dessen Hauptmerkmal zählt, dass er aussetzbar (auch pausierbar) betrieben werden kann. Dieser aussetzbare Taktsignalgenerator einer Hüllschaltung führt dem zugehörigen LS-Funktionsblock eine individuelle, lokal synchrone Frequenz zu, die an eine jeweilige Aufgabe des LS-Funktionsblocks angepasst ist.

Vor der Durchführung eines Datentransfers zwischen einem ersten GALS-Block und einem zweiten GALS-Block sendet der erste GALS-Block ein Anforderungssignal an den zweiten GALS-Block. Dabei wird der Taktgenerator des ersten GALS-Blocks solange pausiert, bis der Taktgenerator des zweiten GALS-Block das Anforderungssignal bestätigt. In einem günstigen Fall bestätigt der zweite GALS-Block das Anforderungssignal unmittelbar, so dass die Pausierung des Taktgenerators keine Taktverzögerung impliziert. Im ungünstigen Fall jedoch nimmt die Bestätigung des Anforderungssignals einen Zeitraum in Anspruch, der eine Aussetzung des lokalen Taktes von einem oder mehreren Takten zur Folge hat. Erst wenn das Anforderungssignal bestätigt ist kann ein Datentransfer zwischen den beiden Blöcken beginnen. Diese Prozedur wird vor jedem Datentransfer durchgeführt. Da ein GALS-Block einer GALS-Schaltung durchaus über mehrere Ports mit mehreren anderen GALS-Blöcken verbunden sein kann, wird sein jeweiliger aussetzbarer Taktgenerator entsprechend häufig pausiert.

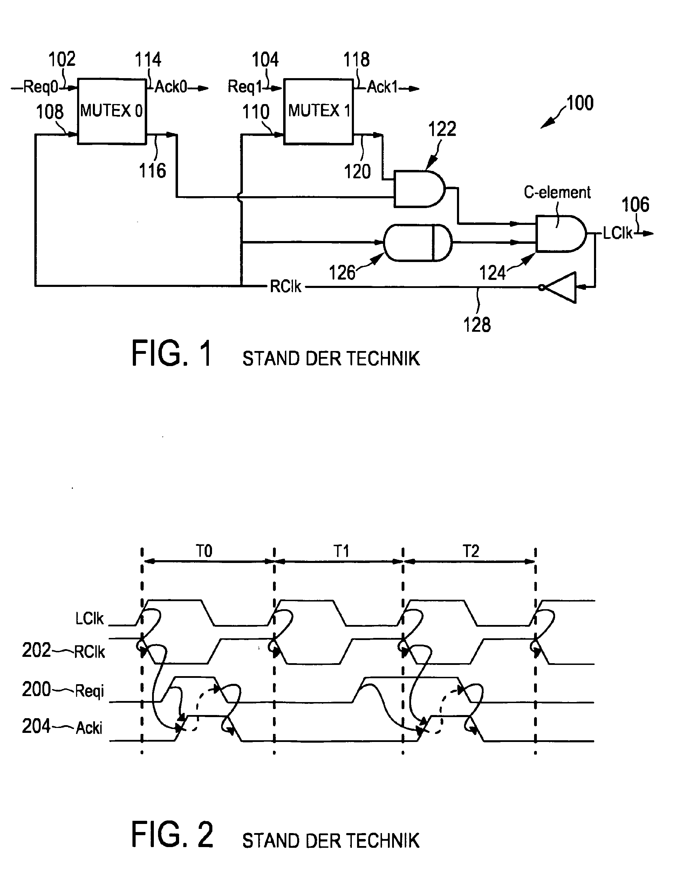

Aus den Literaturstellen "Globally-Asynchronous Locally-Synchronous Architectures for VLSI Systems" Doctor of Technical Sciences Dissertation, ETH, Zurich, Switzerland, 2001 von J. Muttersbach, "GALS System Design - Side Channel Attack Secure Cryptographic Accelerator" Doctor of Technical Sciences Dissertation, ETH, Zurich, Switzerland, 2006 von F. K. Gurkaynak und "Point to Point GALS Interconnect" Proceeding of International Symposium on Asynchronous Circuits and Systems, pp. 69-75, April 2002 von S. Moore et. al. ist eine in Fig. 1 dargestellte Architektur 100 für einen aussetzbaren Taktsignalgenerator bekannt.

Der bekannte Taktsignalgenerator ist als Ringoszillator ausgebildet und führt seinem zugehörigen LS-Funktionsblock das lokale Taktsignal 106 zu. Der Ringoszillator umfasst für jeden Port der (in Fig. 1 nicht gezeigten) zugehörigen Hüllschaltung, zunächst einen sogenannten MUTEX-Baustein, der jeweils zwei Eingänge und zwei Ausgänge aufweist. Einem jeweiligen ersten Eingang ist ein Anforderungssignal (102 bzw. 104) eines anderen GALS-Blocks zugeführt und einem jeweiligen zweiten Eingang das invertierte rückgekoppelte lokale Taktsignal 128. Der MUTEX-Baustein stellt zur Vermeidung von Metastabilitäten sicher, dass nur eines seiner jeweiligen beiden Eingangssignale (102 oder 108 bzw. 104 oder 110) auf den zugehörigen Ausgang weitergeleitet wird (engl. MUTal EXclusion), nämlich jeweils dasjenige, welches zuerst am MUTEX-Baustein eintrifft. Zur Erzielung einer Ringstruktur sind jeweilige zweite Ausgänge der MUTEX-Bausteine einem UND-Gatter 122 zugeführt. Das invertierte lokale Taktsignal 128 ist weiter einem einzigen Verzögerungselement 126 zugeführt. Ausgangsseitig sind das UND-Gatter 122 und das Verzögerungselement 126 mit einem Müller-C-Element 124 verbunden. Müller-C-Elemente sind rückgekoppelte (hysteresebehaftete) Logikbausteine und werden häufig in asynchronen Schaltungen verwendet. Das Ausgangssignal des Müller-C-Elements 124 stellt das lokale Taktsignal 106 dar.

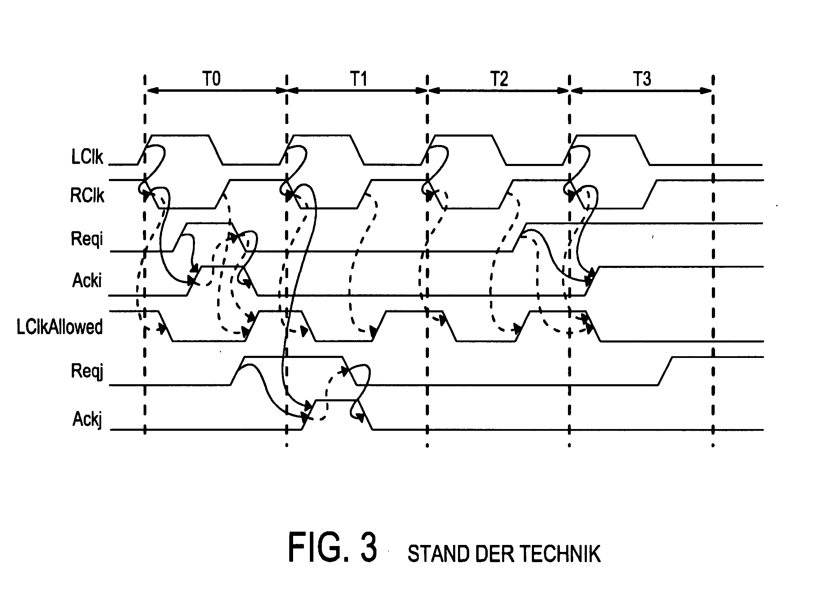

Anhand der Figuren 2 und 3 werden nachfolgend Nachteile der oben skizzierten Schaltung für einen aussetzbaren Taktsignalgenerator erläutert. Die MUTEX-Schaltungen sind so ausgelegt, dass ein Anforderungssignal 200 eines benachbarten GALS-Blocks nur dann unmittelbar bestätigt werden kann, falls zum Zeitpunkt des Eintreffens eines Anforderungssignals das invertierte lokale Taktsignal 202 einen LOW-Pegel aufweist (Zeitspanne T0 in Fig. 2). Trifft hingegen ein Anforderungssignal zu einem Zeitpunkt ein, bei dem das invertierte lokale Taktsignal 202 einen HIGH-Pegel aufweist, so verzögert sich die Bestätigung des Anforderungssignals um eine Taktperiode (Zeitspannen T1 und T2 in Fig. 2). Erst nach Ausgabe des Bestätigungssignals 204 kann ein Datentransfer beginnen.

Aufgrund der Tatsache, dass die Anforderungssignale der umliegenden GALS-Blöcke mit einer von der lokalen Taktsignalfrequenz abweichenden Frequenz eintreffen und das invertierte rückgekoppelte lokale Taktsignal 128 einen Tastgrad von 50% aufweist, liegt die Wahrscheinlichkeit für das Eintreffen eines Anforderungssignal zu einem Zeitpunkt, an dem das invertierte lokale Taktsignal 128 einen HIGH-Pegel aufweist, bei etwa 50%. Anderes formuliert: Bei jedem zweiten eintreffenden Anforderungssignal verzögert sich seine jeweilige Bestätigung um eine lokale Taktperiode. Offensichtlich hat diese Verzögerung eine signifikante Reduzierung der Datendurchsatzrate zur Folge.

Das Maß der Reduzierung der Gesamtdatendurchsatzrate eines GALS-Blocks ist damit auch abhängig von der Anzahl der Ports seiner Hüllschaltung. Je mehr Anforderungssignale verzögert verarbeitet werden, desto stärker reduziert sich die Gesamtdatendurchsatzrate (Fig. 3), da jedes eintreffende Anforderungssignal durch einen HIGH-Pegel des invertierten rückgekoppelten lokalen Taktsignals 128 um einen Takt verzögert verarbeitet wird.

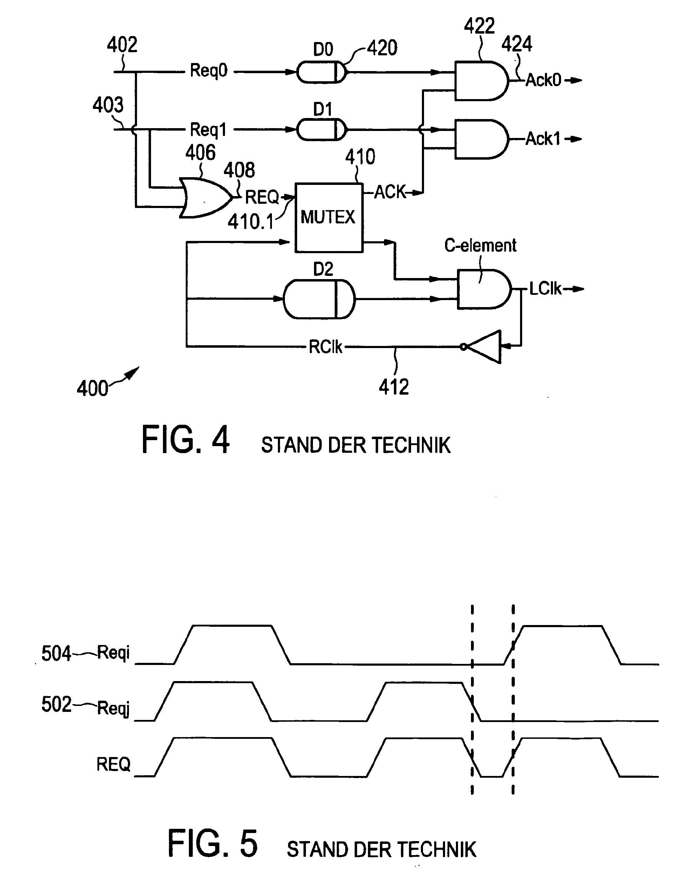

Aus der Literaturstelle "Practical Design of Globally-Asynchronous Locally-Synchronous Systems" Proc. IEEE 6th Intl. Symp. Advanced Research in Asynchronous Circuits and Systems, 2000 von J. Muttersbach et. al. ist eine weitere Schaltung für einen aussetzbarer Taktgenerator bekannt und dieselbe in Fig. 4 dargestellt. Zwei eintreffende Anforderungssignale 402 und 403 werden zunächst in einem ODER-Gatter 406 gebündelt und sodann als ein allgemeines Anforderungssignal 408 einem ersten Eingang 410.1 eines MUTEX-Bausteins 410 zugeführt. Auch bei dieser Schaltung wird das allgemeine Anforderungssignal 408 nur dann weiterverarbeitet, falls es zu einem Zeitpunkt eintrifft, bei dem das invertierte rückgekoppelte lokale Taktsignal 412 den Wert LOW aufweist. Dahingegen hat die in Fig. 4 dargestellte Schaltung die Eigerischaft, dass durch die Bündelung der Vielzahl der Anforderungssignale nur ein erstes Anforderungssignal verzögert verarbeitet wird. Alle weiteren eintreffenden Anforderungssignale werden sofort verarbeitet. Damit weist die Schaltung aus Fig. 4 gegenüber der Schaltung aus Fig. 1 eine erhöhte Datendurchsatzrate auf.

Die Verwendung eines ODER-Gatters zur Bündelung einer Vielzahl Anforderungssignale hat jedoch den Nachteil, dass sehr kurze LOW-Pulse am ersten Eingang 410.1 des MUTEX-Bausteins 410 entstehen können. Ein solcher Fall ist in Fig. 5 dargestellt. Er tritt dann auf, wenn unmittelbar nach Verstreichen eines ersten Anforderungssignals 502 ein zweites Anforderungssignal 504 eintrifft. Diese kurzen LOW-Pulse können aufgrund der verschiedenen lokalen Frequenzen der Vielzahl der LS-Funktionsblöcke beliebig kurz werden, insbesondere kürzer als die Reaktionszeit eines MUTEX-Bausteins. Letzterer Fall hat Instabilitäten zur Folge, die sich auf die gesamte GALS-Schaltung auswirken. Für den stabilen Betrieb der Schaltung aus Fig. 4 sind deshalb zusätzliche, in Fig. 4 nicht gezeigte Kontrollschaltungen notwendig, die das Entstehen Pulse kritischer Dauer vermeiden. Dadurch wird die Flexibilität beim Schaltungsdesign eingeschränkt und die Datendurchsatzrate wiederum reduziert.

Ein weiterer Nachteil der Schaltung 'aus Fig. 4 ist, dass aufgrund der Bündelung der Anforderungssignale und der Verwendung eines einzigen MUTEX-Bausteins für jeden Port zusätzlich jeweils ein Verzögerungselement 420 sowie ein UND-Gatter 404 benötigt wird, damit ein jeweiliges Bestätigungssignal 424 korrekt am zugehörigen Port ausgegeben werden kann. Dabei weist ein jeweilige Verzögerungselement 420 eine Verzögerung auf, die der zusammen genommenen Verzögerung' des ODER-Gatters 406 und des MUTEX-Bausteins 410 entspricht. Der Flächenbedarf und die damit Verlustleistung der GALS-Schaltung wächst damit stark an, was grundsätzlich nachteilig ist.

Ein der Erfindung zugrunde liegendes technisches Problem ist es deshalb, einen aussetzbaren Taktgenerator vorzuschlagen, der ein oder mehrere externe Anforderungssignale weitestgehend unmittelbar bestätigen kann, ohne dabei die Betriebssicherheit einzuschränken.

Das technische Problem wird gelöst für einen aussetzbarer Taktgenerator, der ausgebildet ist, ein lokales Taktsignal zu erzeugen und auszugeben, ein oder mehrere Anforderungssignale zu empfangen und in Reaktion auf jedes Anforderungssignal ein jeweiliges Bestätigungssignal zu generieren und nach extern abzuführen. Der aussetzbare Taktgenerator umfasst eine Ringschaltung mit einer Arbitrierschaltung mit einem oder mehreren ersten Eingangskontakten, denen jeweils ein Anforderungssignal zugeführt ist. Die Arbitrierschaltung ist ausgebildet, ein aus dem lokalen Taktsignal abgeleitetes Rückkopplungssignal zu empfangen, und weiter ausgebildet, in Abhängigkeit von diesem Signal und der Anforderungssignale zum einen an einem oder mehreren ersten Ausgangskontakten jeweils ein Bestätigungssignal auszugeben und zum anderen ein Auswahlsignal in die Ringschaltung einzuspeisen. Weiter umfasst die Ringschaltung ein hysteresebehaftetes Speicherelement, aufweisend einen ersten Eingang, dem das Auswahlsignal zugeführt ist und dessen Ausgangssignal als lokales Taktsignal nach extern abgeführt und zugleich invertiert und verzögert einem zweiten Eingang des Speicherelements zugeführt ist.

Dabei ist das invertierte Ausgangstaktsignal einem ersten Eingang eines ersten UND-Gatters zugeführt, die Verzögerung des invertierten Ausgangstaktsignals durch ein erstes und ein zweites Verzögerungselement, die seriell miteinander verbunden sind, realisiert ist, und das durch das erste Verzögerungselement verzögerte Signal einem zweiten Eingang des ersten UND-Gatters zugeführt ist, wobei das Ausgangssignal des ersten UND-Gatters das abgeleitete Rückkopplungssignal der Ringschaltung darstellt.

Der Erfindung liegt die Überlegung zugrunde, dass der Nachteil der bekannten Schaltung aus Fig. 1, die verzögerte Ausgabe der Bestätigungssignale und die damit verbundene Datendurchsatzrate, unter anderem in der langen relativen' Einschaltdauer des rückgekoppelten lokalen Taktsignals 128 begründet ist. Bei der in Fig. 1 dargestellten Schaltung beträgt die relative Einschaltdauer (auch als Tastgrad bezeichnet) des rückgekoppelten Taktsignals 128 aufgrund der einfachen Invertierung des lokalen Taktsignals 106 50%. Ein Anforderungssignal kann jedoch nur dann bearbeitet werden, wenn das rückgekoppelte Taktsignal einen LOW-Pegel aufweist.

Die Wahrscheinlichkeit dafür, dass ein Anforderungssignal zu einem Zeitpunkt eintrifft, bei dem eine unmittelbare Verarbeitung erfolgt, kann also durch eine reduzierte relative Einschaltdauer des rückgekoppelten Signals erhöht werden. Dieser Idee kommt die erfindungsgemäße Schaltung für einen aussetzbaren Taktgenerator nach.

Durch die logische UND-Verknüpfung des rückgekoppelten lokalen Taktsignals mit dem verzögerten rückgekoppelten lokalen Taktsignal reduziert sich die relative Einschaltdauer des der Arbitrierschaltung zugeführten Signals um einen Faktor, der im wesentlichen durch die Verzögerungszeit des ersten Verzögerungselementes bestimmt ist. Dies hat den Vorteil, dass sich die Wahrscheinlichkeit einer unmittelbaren Verarbeitung eintreffender Anforderungssignale erhöht und sich damit eine Datentransferrate insgesamt erhöht. Außerdem können die Verzögerungen der Verzögerungselemente so gewählt sein, dass das lokale Taktsignal einen Tastgrad von 50% beibehält, was vorteilhaft ist, da die viele taktbetriebene Nutzer eines Taktsignal einen Tastgrad des Taktsignals von 50% erfordern.

Nachfolgend werden Ausführungsvarianten der Erfindung erläutert. Die zusätzlichen Merkmale der verschiedenen Ausführungsvarianten können, sofern sie nicht als Alternativen zueinander beschrieben sind, zur Bildung anderer Ausführungsformen miteinander kombiniert werden.

Zweckmäßigerweise umfasst die Arbitrierschaltung in einer Ausführungsform eine oder mehrere Auswahlschaltungen und ein zweites UND-Gatter, wobei eine jeweilige Auswahlschaltung einen ersten Eingang zum Empfangen eines jeweiligen Anforderungssignals, einen zweiten Eingang zum Empfangen des aus dem lokalen Taktsignal abgeleiteten Rückkopplungssignal, einen ersten Ausgang zum Ausgeben eines jeweiligen Bestätigungssignal und einen zweiten Ausgang, der mit einem Eingang des zweiten UND-Gatters verbunden ist, umfasst.

Dabei ist eine jeweilige Auswahlschaltung ausgebildet, den ersten Ausgang auf den ersten Eingang zu schalten, wenn bei einer positiven Taktflanke des Anforderungssignals das abgeleitete Rückkopplungssignal einen LOW-Pegel aufweist und den zweiten Ausgang auf den zweiten Eingang zu schalten, wenn bei einer positiven Taktflanke des abgeleiteten Rückkopplungssignal das Anforderungssignal einen LOW-Pegel aufweist, wobei das Ausgangssignal des UND-Gatters das Auswahlsignal darstellt.

Eine Auswahlschaltung, die die letzt genannte Abbildung leistet, ist beispielsweise eine MUTEX-Schaltung.

In dieser Ausführungsform wird verhindert, dass Anforderungssignale während eines HIGH-Pegels des rückgekoppelten Taktsignals bestätigt werden. Anderenfalls könnten eingehende Anforderungssignal schaltungstechnische Instabilitäten auslösen und damit die Betriebssicherheit gefährden.

In einer Ausführungsform ist das hysteresebehaftete Speicherelement beispielsweise ein Müller-C-Element. Ein Müller-C-Element ist ein Standardbauteil der asynchronen Datentechnik und leistet eine für den Betrieb des erfindungsgemäßen Taktgenerators notwendige Abbildung zweier Eingangssignale auf ein Ausgangssignal. Das Ausgangssignal des Müller-C-Elements nimmt den Wert einer logischen Null an, wenn beide Eingangssignale einen LOW-Pegel aufweisen und den Wert einer logischen EINS, wenn beide Eingangssignale einen HIGH-Pegel aufweisen. Weichen die Werte der Eingangssignale voneinander ab, so ändert sich der Zustand des Müller-C-Elements nicht.

Bevorzugt sind die Verzögerungszeiten des ersten und des zweiten Verzögerungselement so gewählt, dass die Gleichungen (1) und (2) erfüllt sind:

$$t_{V1} + t_{V2} + t_{C-Element} + t_{Inverter} = T_{L-Takt} \qquad (1)$$

$$t_{V2} = t_{UND1} + \max\left(t_{MUTEX}\right) + t_{UND2} \qquad (2)$$

wobei $t_{v1}$ die Verzögerungszeit des ersten Verzögerungselements ist, $t_{v2}$ die Verzögerungszeit des zweiten Verzögerungselements, $t_{C-Element}$ die Laufzeit des Müller-C-Elements, $t_{Inverter}$ die Laufzeit eines Inverters, $t_{UND1}$ die Laufzeit des ersten UND-Gatters, $t_{UND2}$ die Laufzeit des zweiten UND-Gatters, $\max(t_{MUTEX})$ die längste Laufzeit einer jeweiligen MUTEX-Schaltung und $T_{L-Takt}$ die Taktperiode des lokalen Taktsignals bezeichnet.

Die Dimensionierung der Verzögerungszeiten $t_{v1}$ und $t_{v2}$ nach Gleichung (1) bewirkt, dass sich die relativen Einschaltdauer des lokalen Taktsignals durch die Rückkopplung nicht ändert, sondern konstant bei 50% liegt. Dies ist vorteilig, da Empfänger des lokalen Taktsignals in der Regel ein Taktsignal benötigen, welches gerade eine relative Einschaltdauer von 50% aufweist.

Die Dimensionierung der Verzögerungszeiten $t_{v2}$ nach Gleichung (2) bewirkt weiter, dass das verzögerte Signal und das Auswahlsignal der Arbitrierschaltung in etwa gleichzeitig beim hysteresebehafteten Speicherelement eintreffen. Das gleichzeitige Eintreffen der beiden Signale vermeidet das Entstehen extrem kurzer Pulse, die, wie zu Figuren 4 und 5 ausgeführt, zu Instabilitäten im Taktgenerator führen könnten. Etwaige unterschiedliche Laufzeiten der Auswahlschaltungen und damit verbundenen unterschiedliche Ankunftszeiten des Auswahlsignals am hysteresebehafteten Speicherelement werden ebenfalls kompensiert, da sich der Zustand des hysteresebehafteten Speicherelements nur dann ändert, wenn beide Eingangssignale den gleichen Wert aufweisen.

Durch die Auslegung der Verzögerungszeit $t_{v1}$ kann der Tastgrads des der Arbitrierschaltung zugeführten rückgekoppelten lokalen Taktsignals eingestellt werden, beispielsweise auf 20%. Die Wahrscheinlichkeit für das Eintreffen eines Anforderungssignals zum Zeitpunkt eines LOW-Pegels des der Arbitrierschaltung zugeführten rückgekoppelten lokalen Taktsignals ist in diesem Fall gegenüber der Schaltung aus Fig. 1 um etwa 50% reduziert und die Verarbeitgeschwindigkeit der Anforderungssignale insgesamt erhöht. Gleichzeitig kann die Verzögerungszeit des ersten Verzögerungselements so gewählt werden, dass eine minimale Pulsdauer des der Arbitrierschaltung zugeführten rückgekoppelten lokalen Taktsignals bestehen bleibt.

Ein Anwendungsbeispiel des erfindungsgemäßen aussetzbaren Taktgenerators oder eines seiner Ausführungsbeispiele ist seine Verwendung in einer Hüllschaltung für einen lokal synchronen (LS) Funktionsblock einer GALS-Schaltung. LS-Funktionsblöcke mit jeweils unterschiedlichen Taktfrequenzen fordern untereinander durch Anforderungssignale Datentransfers an. Die Anforderungssignale werden über die Ports der Hüllschaltung empfangen. Geht ein erstes Anforderungssignal bei dem erfindungsgemäßen Taktgenerator ein und kann bestätigt werden, so setzt nach der Aussendung des Bestätigungssignals der Datentransfer zwischen den zwei LS-Funktionsblöcken ein.

Somit erlaubt der erfindungsgemäße aussetzbare Taktgenerator einen Betrieb der GALS-Schaltung, bei dem der Datentransfer zwischen LS-Funktionsblöcken durch eingehende Anforderungssignale getaktet werden kann. Aufgrund der Fähigkeit des Taktgenerators, Anforderungssignale weitestgehend unmittelbar bestätigen zu können, ist eine hohe Datentransferrate gewährleistet.

Weitere Vorteile der Erfindung werden bei der folgenden Beschreibung einiger Ausführungsbeispiele anhand der Figuren erläutert. Darin zeigen

Figur 1 in schematischer Darstellung eine Schaltung für einen ersten aussetzbaren Taktgenerator gemäß dem Stand der Technik,

Figur 2 einen beispielhaften Verlauf der Ein- und Ausgangssignale der Schaltung aus Fig. 1 über der Zeit,

Figur 3 einen weiteren beispielhaften Verlauf der Ein- und Ausgangssignale der Schaltung aus Fig. 1 über der Zeit,

Figur 4 in schematischer Darstellung eine Schaltung für einen zweiten aussetzbaren Taktgenerator gemäß dem Stand der Technik,

Figur 5 einen Verlauf der Eingangssignale und eines gebündelten Eingangssignals der Schaltung aus Fig. 4 über der Zeit,

Figur 6 in schematischer Darstellung eine Schaltung für einen erfindungsgemäßen aussetzbaren Taktgenerator,

Figur 7 einen Verlauf der Ein- und Ausgangssignale der Schaltung aus Fig. 6 über der Zeit, und

Figur 8 (a) Simulationsergebnisse einer Schaltung für einen aussetzbaren Taktgenerator gemäß dem Stand der Technik sowie vergleichend dazu

Figur 8 (b) Simulationsergebnisse einer Schaltung für einen erfindungsgemäßen aussetzbaren Taktgenerator.

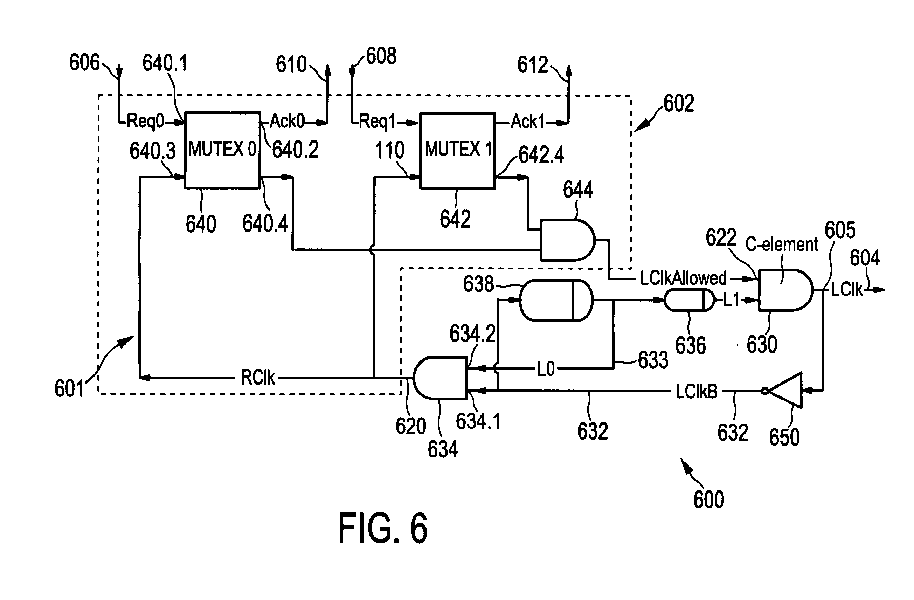

Fig. 6 zeigt in schematischer Darstellung eine Schaltung für einen erfindungsgemäßen aussetzbaren Taktgenerator. Der Taktgenerator weist eine Ringstruktur 601 auf, die im wesentlichen durch eine Arbitrierschaltung 602, einem Müller-C-Element 630 und einem Inverter 650 gebildet wird.

Die Arbitrierschaltung 602 umfasst beispielhaft für den Empfang zweier Anforderungssignale 606 und 608 und für Ausgabe entsprechender Bestätigungssignale 610 und 612 zunächst zwei MUTEX-Bausteine 640 und 642. Die MUTEX-Bausteine verhindern, dass ein Bestätigungssignal ausgegeben wird, wenn das aus dem Ausgangstaktsignal 604 rückgekoppelte Signal 620 einen HIGH-Pegel aufweist und vermeiden so Instabilitäten der Schaltung. Die jeweiligen zweiten Ausgänge 640.4 und 642.4 sind einem UND-Gatter 644 zugeführt. Das Ausgangssignal des UND-Gatter 622 ist dem Müller-C-Element zugeführt.

Das Müller-C-Element ist ein hysteresebehaftetes 1-bit Speicherelement, welches den Zustand "1" einnimmt, wenn beide Eingangssignal einen HIGH-Pegel aufweisen sowie den Zustand "0", wenn beide Eingangssignal einen LOW-Pegel aufweisen. Weisen die Eingangssignale einen unterschiedlichen Pegel auf, so ändert das Müller-C-Element seinen Zustand nicht.

An dem Ausgang 605 der Schaltung ist das lokale Taktsignal 604 zugleich einem (in Fig. 6 nicht gezeigten) Nutzer des Taktsignals nach extern geführt und zum anderen zurückgekoppelt. Die Rückkopplung besteht zunächst in der Invertierung durch den Inverter 650 und der Zuführung des invertierten Taktsignals zu einem ersten Eingang 634.1 eines UND-Gatters 634. Weiter wird das invertierte Signal 632 zwei seriell miteinander verbundenen Verzögerungselementen 638 und 636 zugeführt.

Das durch das erste Verzögerungselement 638 verzögerte Signal 633 ist dem zweiten Eingang 634.2 des UND-Gatters 634 zugeführt und das durch beide Verzögerungselemente verzögerte Signal dem Müller-C-Element. Das Ausgangssignal 620 des UND-Gatters 634 ist dem MUTEX-Bausteinen zugeführt. Die logische UND-Verknüpfung des invertierten Signals 632 mit dem verzögerten Signal 633 bewirkt eine Reduzierung des Tastgrads des der Arbitrierschaltung zugeführten Signals 620.

Die in Fig. 6 gezeigte Arbitrierschaltung des erfindungsgemäßen aussetzbaren Taktgenerators umfasst beispielhaft zwei MUTEX-Bausteine für den Empfang von zwei Anforderungssignalen. Denkbar sind selbstverständlich auch Arbitrierschaltungen, die nur einen oder mehr als zwei MUTEX-Bausteine umfassen, so dass nur ein oder mehrere Anforderungssignale empfangen und verarbeitet werden können.

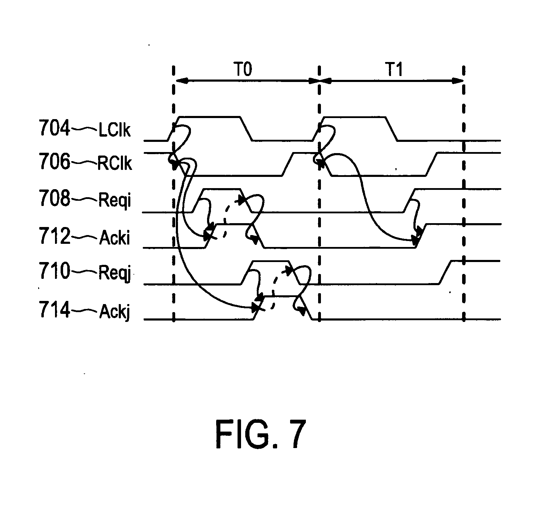

Fig. 7 zeigt einen Verlauf der Ein- und Ausgangssignale der Schaltung aus Fig. 6 über der Zeit. Das erste Signal 704 stellt das Ausgangstaktsignal 604 mit einem Tastgrad von 50% dar. Das der Arbitrierschaltung 602 zugeführte rückgekoppelte Taktsignal ist durch das zweite Signal 706 dargestellt. Es ist zum Ausgangstaktsignal invertiert und weist einen verminderten Tastgrad auf. Das Zeitfenster, in dem Anforderungssignale bestätigt werden können, ist gegenüber dem Zeitfenster aus Fig. 2 um ca. 50% vergrößert.

Die Signal 708 und 710 stellen Anforderungssignale dar. Durch das vergrößerte Zeitfenster können beide Anforderungssignal unmittelbar durch entsprechende Bestätigungssignale 712 und 714 bestätigt werden. Die kurze Verzögerung zwischen der Ankunft eines Anforderungssignals und der Ausgabe des Bestätigungssignals ergibt sich durch die natürliche Laufzeit eines MUTEX-Bausteins.

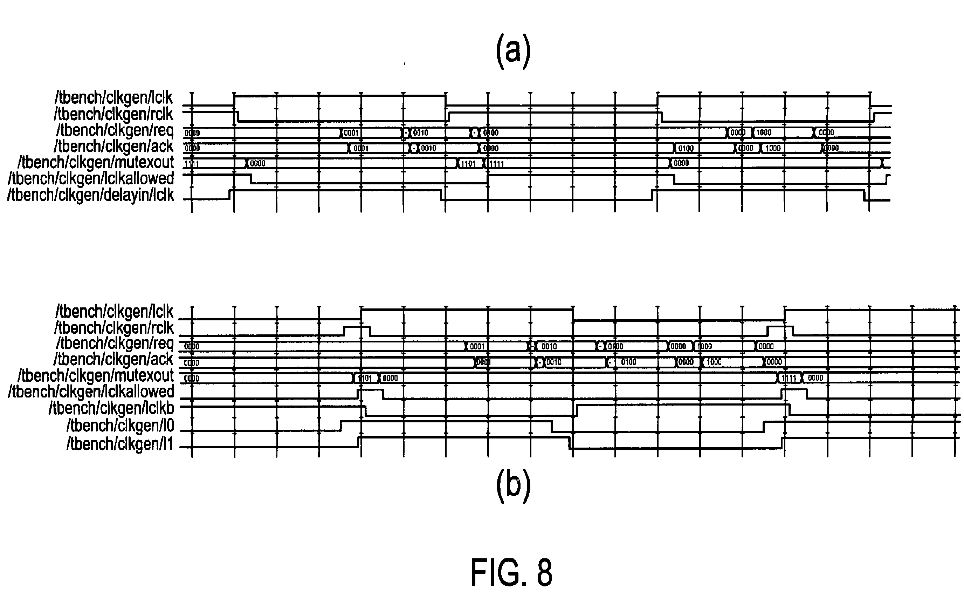

In den Figuren 8 (a) und (b) sind vergleichend die Simulationsergebnisse einer Schaltung für einen aussetzbaren Taktgenerator gemäß dem Stand der Technik (Fig. 8 a) und einer Schaltung für einen erfindungsgemäßen aussetzbaren Taktgenerator (Fig. 8 b) dargestellt.

In den ersten beiden Spalten sind das Ausgangstaktsignal und das der Arbitrierschaltung zugeführte rückgekoppelte Taktsignal dargestellt. Die Arbitrierschaltung umfasst bei beiden Schaltungen vier Eingänge für vier Anforderungssignale. In der dritten Spalte ist durch ein 4-bit-breites Wort dargestellt, zu welchen Zeitpunkten die Anforderungssignale eintreffen.

Die vierte Spalte zeigt korrespondierend zu den Signalverläufen in der zweiten und dritten Spalte ebenfalls durch ein 4-bit-breites Wort an, welches der Anforderungssignale bestätigt werden konnte. Das Zeitfenster, in dem Anforderungssignale bestätigt werden können, ist in Fig. 8 b gegenüber dem Zeitfenster aus Fig. 8 (a), stark vergrößert. Somit können in einer Taktperiode des erfindungsgemäßen Taktgenerators alle vier eingehende Anforderungssignale bestätigt werden, wohingegen bei der Schaltung gemäß dem Stand der Technik zwei Anforderungssignale um eine Taktperiode verzögert verarbeitet werden.

**Patentansprüche**

1. Aussetzbarer Taktgenerator (600), der ausgebildet ist, ein lokales Taktsignal (604) zu erzeugen und auszugeben, ein oder mehrere Anforderungssignale (606, 608) zu empfangen und in Reaktion auf jedes Anforderungssignal ein jeweiliges Bestätigungssignal (610, 612) zu generieren und nach extern abzuführen, umfassend eine Ringschaltung (601) mit

   - einer Arbitrierschaltung (602) mit einem oder mehreren ersten Eingangskontakten, denen jeweils ein Anforderungssignal (606, 608) zugeführt ist, wobei die Arbitrierschaltung (602) ausgebildet ist, ein aus dem lokalen Taktsignal (604) abgeleitetes Rückkopplungssignal (620) zu empfangen, und weiter ausgebildet ist, in Abhängigkeit von diesem Signal (620) und der Anforderungssignale zum einen an einem oder mehreren ersten Ausgangskontakten jeweils ein Bestätigungssignal auszugeben und zum anderen ein Auswahlsignal (622) in die Ringschaltung (601) einzuspeisen, und
   - einem hysteresebehafteten Speicherelement (630), aufweisend einen ersten Eingang, dem das Auswahlsignal (622) zugeführt ist und dessen Ausgangssignal (604) als lokales Taktsignal nach extern abgeführt und zugleich invertiert und verzögert einem zweiten Eingang des Speicherelements (630) zugeführt ist,
   **dadurch gekennzeichnet dass**
   - das invertierte Ausgangstaktsignal (632) einem ersten Eingang eines ersten UND-Gatters (634) zugeführt ist,
   - die Verzögerung des invertierten Ausgangstaktsignals durch ein erstes (638) und ein zweites Verzögerungselement (636), die seriell miteinander verbunden sind, realisiert ist, und

- das durch das erste Verzögerungselement (638) verzögerte Signal einem zweiten Eingang des ersten UND-Gatters (634) zugeführt ist, wobei das Ausgangssignal des ersten UND-Gatters das abgeleitete Rückkopplungssignal (620) der Ringschaltung (601) darstellt.

2. Aussetzbarer Taktgenerator nach Anspruch 1, bei dem die Arbitrierschaltung eine oder mehrere Auswahlschaltungen (640, 642) und ein zweites UND-Gatter (644) umfasst, eine jeweilige Auswahlschaltung (640) aufweisend

- einen ersten Eingang (640.1) zum Empfangen eines jeweiligen Anforderungssignals (606),
- einen zweiten Eingang (640.3) zum Empfangen des aus dem lokalen Taktsignal (604) abgeleiteten Rückkopplungssignal (620),
- einen ersten Ausgang (640.2) zum Ausgeben eines jeweiligen Bestätigungssignal (610), und
- einen zweiten Ausgang (640.4), der mit einem Eingang des zweiten UND-Gatters (644) verbunden ist,

und ausgebildet, den ersten Ausgang auf den ersten Eingang zu schalten, wenn bei einer positiven Taktflanke des Anforderungssignals (606) das abgeleitete Rückkopplungssignal (620) einen LOW-Pegel aufweist und den zweiten Ausgang auf den zweiten Eingang zu schalten, wenn bei einer positiven Taktflanke des abgeleiteten Rückkopplungssignal (620) das Anforderungssignal einen LOW-Pegel aufweist, wobei das Ausgangssignal des UND-Gatters das Auswahlsignal (622) darstellt.

3. Aussetzbarer Taktgenerator nach Anspruch 2, bei dem die Auswahlschaltung eine MUTEX-Schaltung ist.

4. Aussetzbarer Taktgenerator nach einem der vorhergehenden Ansprüche, bei dem das hysteresebehaftete Speicherelement ein Müller-C-Element ist.

5. Aussetzbarer Taktgenerator nach Anspruch 3 und 4, bei dem die Verzögerungszeiten des ersten (638) und zweiten Verzögerungselement (636) so gewählt sind, dass die Gleichungen

$$t_{V1} + t_{V2} + t_{C-Element} + t_{Inverter} = T_{L-Takt} \tag{1}$$

$$t_{V2} = t_{UND1} + \max\left(t_{MUTEX}^{\cdot}\right) + t_{UND2} \tag{2}$$

erfüllt sind, wobei $t_{v1}$ die Verzögerungszeit des ersten Verzögerungselements (638) ist, $t_{v2}$ die Verzögerungszeit des zweiten Verzögerungselements (636), $t_{C-Element}$ die Laufzeit des Müller-C-Elements (630), $t_{Inverter}$ die Laufzeit eines Inverters (650), $t_{UND1}$ die Laufzeit des ersten UND-Gatters (634), $t_{UND2}$ die Laufzeit des zweiten UND-Gatters (644), $\max(t_{Mutex})$ die längste Laufzeit einer jeweiligen MUTEX-Schaltung und $T_{L-Takt}$ die Taktperiode des lokalen Taktsignals bezeichnet.

6. Hüllschaltung für einen lokal synchronen Funktionsblock eines global asynchronen lokal synchronen (GALS)-Blocks, enthaltend einen aussetzbaren Taktgenerator nach einem der vorhergehenden Ansprüche.

7. GALS-Schaltung, umfassend einen oder mehrere GALS-Blöcke mit einer Hüllschaltung nach Anspruch 6.

**Claims**

1. Interruptible clock generator (600) which is configured to produce and emit a local clock signal (604), to receive one or more request signals (606, 608) and, in response to each request signal, to generate a respective acknowledgment signal (610, 612) and discharge it to the outside, comprising a ring circuit (601) having

- an arbiter circuit (602) with one or more first input contacts, each of which is supplied with a request signal (606, 608), the arbiter circuit (602) being configured to receive a feedback signal (620) derived from the local clock signal (604), and further being configured, dependent on this signal (620) and the request signals, to emit an acknowledgment signal at one or more first output contacts, on the one hand, and to feed a selection signal (622) into the ring circuit (601), on the other hand, and

- a hysteresis-affected memory element (630) comprising a first input to which the selection signal (622) is supplied and the output signal (604) of which is discharged to the outside as a local clock signal and at the same time is supplied, inverted and delayed, to a second input of the memory element (630),
**characterised in that**
- the inverted output clock signal (632) is supplied to a first input of a first AND gate (634),
- the delay of the inverted output clock signal is effected by a first (638) and a second delay element (636) which are serially connected to one another, and
- the signal delayed by the first delay element (638) is supplied to a second input of the first AND gate (634), the output signal from the first AND gate constituting the derived feedback signal (620) of the ring circuit (601).

2. Interruptible clock generator according to claim 1, wherein the arbiter circuit comprises one or more selection circuits (640, 642) and a second AND gate (644), a respective selection circuit (640) comprising

- a first input (640.1) for receiving a respective request signal (606),
- a second input (640.3) for receiving the feedback signal (620) derived from the local clock signal (604),
- a first output (640.2) for emitting a respective acknowledgment signal (610), and
- a second output (640.4) which is connected to an input of the second AND gate (644),

and configured to switch the first output to the first input when, at a positive clock edge of the request signal (606), the derived feedback signal (620) has a LOW level and to switch the second output to the second input when, at a positive clock edge of the derived feedback signal (620), the request signal has a LOW level, the output signal of the AND gate constituting the selection signal (622).

3. Interruptible clock generator according to claim 2, wherein the selection circuit is a MUTEX circuit.

4. Interruptible clock generator according to one of the preceding claims, wherein the hysteresis-affected memory element is a Muller C-element.

5. Interruptible clock generator according to claims 3 and 4, wherein the delay indices of the first (638) and second delay element (636) are selected such that the equations

$$t_{V1} + t_{V2} + t_{\text{C-Element}} + t_{\text{Inverter}} = T_{\text{L-Takt}} \qquad (1)$$

$$t_{V2} = t_{\text{UND1}} + \max(t_{\text{MUTEX}}) + t_{\text{UND2}} \qquad (2)$$

are satisfied, where $t_{V1}$ is the delay time of the first delay element (638), $t_{V2}$ is the delay time of the second delay element (636), $t_{\text{C Element}}$ is the run time of the Muller C-element (630), $t_{\text{Inverter}}$ is the run time of an inverter (650), $t_{\text{UND1}}$ is the run time of the first AND gate (634), $t_{\text{UND2}}$ is the run time of the second AND gate (644), $\max(t_{\text{MUTEX}})$ is the longest run time of a respective MUTEX circuit and $T_{\text{L-Takt}}$ is the clock period of the local clock signal.

6. Wrapper for a locally synchronous function block of a globally asynchronous locally synchronous (GALS) block containing an interruptible clock generator according to one of the preceding claims.

7. GALS circuit, comprising one or more GALS blocks having a wrapper according to claim 6.

**Revendications**

1. Générateur d'horloge interruptible (600) conçu pour générer et émettre un signal d'horloge local (604), pour recevoir un ou plusieurs signaux de requête (606, 608) et pour générer, en réponse à chaque signal de requête, un signal de confirmation (610, 612) correspondant et l'envoyer vers l'extérieur, comprenant un circuit en boucle (601) avec

- un circuit d'arbitrage (602) avec un ou plusieurs premiers contacts d'entrée, au niveau de chacun desquels est introduit un signal de requête (606, 608), ce circuit d'arbitrage (602) étant conçu pour recevoir un signal de réaction (620) dérivé du signal d'horloge local (604), et conçu en outre, en fonction de ce signal (620) et des signaux de requête, d'une part pour envoyer un signal de confirmation, à un ou plusieurs premiers contacts de sortie, d'autre part pour introduire un signal de sélection (622) dans le circuit en boucle (601), et

- un élément de mémoire à hystérésis (630), comprenant une première entrée, dans laquelle est introduit le signal de sélection (622) et dont le signal de sortie (604) est émis vers l'extérieur en tant que signal d'horloge local et simultanément introduit de manière inversée et retardée dans une deuxième entrée de l'élément de mémoire (630),

**caractérisé en ce que**

- le signal d'horloge de sortie inversé (632) est introduit dans une première entrée d'une première porte ET (634),
- le retard du signal d'horloge de sortie inversé est généré par un premier (638) et un deuxième élément de retard (636) branchés en série, et
- le signal retardé par le premier élément de retard (638) est introduit dans une deuxième entrée de la première porte ET (634), le signal de sortie de la première porte ET constituant le signal de réaction (620) du circuit en boucle (601).

**2.** Générateur d'horloge interruptible selon la revendication 1, dans lequel le circuit d'arbitrage comprend un ou plusieurs circuits de sélection (640, 642) et une deuxième porte ET (644), un circuit de sélection (640) comprenant :

- une première entrée (640.1) pour la réception d'un signal de requête (606) correspondant,
- une deuxième entrée (640.3) pour la réception du signal de réaction (620) dérivé du signal d'horloge local (604),
- une première sortie (640.2) pour l'émission d'un signal de confirmation (610) correspondant, et
- une deuxième sortie (640.4), reliée à une entrée de la deuxième porte ET (644),

et conçu pour brancher la première sortie sur la première entrée lorsque, lors d'un flanc d'horloge positif du signal de requête (606), le signal de réaction (620) dérivé présente un niveau bas (LOW), et pour brancher la deuxième sortie sur la deuxième entrée, lorsque, lors d'un flanc d'horloge positif du signal de réaction (620) dérivé, le signal de requête présente un niveau bas (LOW), le signal de sortie de la porte ET constituant le signal de sélection (622).

**3.** Générateur d'horloge interruptible selon la revendication 2, dans lequel le circuit de sélection est un circuit MUTEX.

**4.** Générateur d'horloge interruptible selon l'une des revendications précédentes, dans lequel l'élément de mémoire à hystérésis est un élément C Müller.

**5.** Générateur d'horloge interruptible selon la revendication 3 et 4, dans lequel les temps de retard du premier (638) et du deuxième élément de retard (636) sont choisis de façon à ce que les équations

$$t_{V1} + t_{V2} + t_{C-Element} + t_{Inverter} = T_{L-Takt} \tag{1}$$

$$t_{V2} = t_{UND1} + \max\left(t_{MUTEX}\right) + t_{UND2} \tag{2}$$

soient vérifiées, $t_{v1}$ étant le temps de retard du premier élément de retard (638), $t_{v2}$ étant le temps de retard du deuxième élément de retard (636), $t_{C-element}$ désignant le temps de fonctionnement de l'élément C Müller (630), $t_{Inverter}$ désignant le temps de fonctionnement d'un inverseur (650), $t_{UND1}$ désignant le temps de fonctionnement de la première porte ET (634), $t_{UND2}$ désignant le temps de fonctionnement de la deuxième porte ET (644), $\max(t_{MUTEX})$ désignant le temps de fonctionnement le plus long d'un circuit MUTEX correspondant et $T_{L-Takt}$ désignant la période d'horloge du signal d'horloge local.

**6.** Circuit d'enveloppe pour un bloc fonctionnel synchrone local d'un bloc Globalement Asynchrone et Localement Synchrone (GALS), contenant un générateur d'horloge interruptible selon l'une des revendications précédentes.

**7.** Circuit GALS comprenant un ou plusieurs blocs GALS avec un circuit d'enveloppe selon la revendication 6.

FIG. 1   STAND DER TECHNIK

FIG. 2   STAND DER TECHNIK

T0   T1   T2   T3

LClk
RClk
Reqi
Acki
LClkAllowed
Reqj
Ackj

FIG. 3   STAND DER TECHNIK

**FIG. 4** STAND DER TECHNIK

**FIG. 5** STAND DER TECHNIK

FIG. 6

FIG. 7

(a)

(b)

FIG. 8

EP 2 380 072 B1

**EP 2 380 072 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur

- **J. MUTTERSBACH.** Globally-Asynchronous Locally-Synchronous Architectures for VLSI Systems. *Doctor of Technical Sciences Dissertation,* 2001
- **F. K. GURKAYNAK.** GALS System Design - Side Channel Attack Secure Cryptographic Accelerator. *Doctor of Technical Sciences Dissertation,* 2006
- **S. MOORE.** Point to Point GALS Interconnect. *Proceeding of International Symposium on Asynchronous Circuits and System,* April 2002, 69-75
- **J. MUTTERSBACH.** Practical Design of Globally-Asynchronous Locally-Synchronous Systems. *Proc. IEEE 6th Intl. Symp. Advanced Research in Asynchronous Circuits and Systems,* 2000